# EUROPEAN PATENT APPLICATION

(11) **EP 4 582 945 A1**
(43) Date of publication of application: **09.07.2025**
(21) Application number: 23870723.6
(22) Date of filing: 25.09.2023
(51) Int. Cl.: G06F 9/48

(54) **TASK SCHEDULING METHOD, AND ELECTRONIC APPARATUS**

(30) Priority: 26.09.2022 CN 202211176121
(71) Applicant: Huawei Technologies Co., Ltd., Shenzhen, Guangdong 518129 (CN)
(72) Inventor: XING, Shaoxu, Shenzhen, Guangdong 518129 (CN); ZHENG, Qiaoshi, Shenzhen, Guangdong 518129 (CN); LIN, Jiashu, Shenzhen, Guangdong 518129 (CN); ZHU, Siyu, Shenzhen, Guangdong 518129 (CN); WANG, Tianqi, Shenzhen, Guangdong 518129 (CN)
(74) Representative: Goddar, Heinz J.
(86) International application number: PCT/CN2023/121131
(87) International publication number: WO 2024/067492

(57) **Abstract**

This application provides a task scheduling method and an electronic apparatus. The task scheduling method includes: creating, based on data variables included in a plurality of tasks and a dependency relationship between tasks among the plurality of tasks in terms of data variables, a task information table including the plurality of tasks, and creating a data variable table corresponding to the task information table; and scheduling, based on the task information table and the data variable table, the plurality of tasks to arithmetic units in a processing element array for execution. The task information table records task information of each of the plurality of tasks. The task information includes a task identifier of each task, a quantity of previous tasks on which each task depends, and an identifier of a task depending on each task. The data variable table records a data variable identifier, a task identifier of at least one task, and an access mode of the at least one task for a data variable. In the task scheduling method, a task scheduling list can be simplified, to improve task scheduling efficiency and increase a task execution speed.

## Description

This application claims priority to Chinese Patent Application No. 202211176121.2, filed with the China National Intellectual Property Administration on September 26, 2022 and entitled "TASK SCHEDULING METHOD AND ELECTRONIC APPARATUS", which is incorporated herein by reference in its entirety.

### TECHNICAL FIELD

Embodiments of this application relate to the field of computer technologies, and in particular, to a task scheduling method and an electronic apparatus.

### BACKGROUND

With development of science and technologies, computer technologies have been improved rapidly, and the deep learning field and the parallel computing field have become mainstream research directions. In the deep learning field or the parallel computing field, because a computer needs to process a large amount of data and execute a large quantity of tasks, task scheduling usually needs to be performed to increase a parallel processing speed for tasks.

In current task scheduling, three data structures: a task memory (task memory, TM), a data version memory (data version memory, VM), and a dependency memory (dependency memory, DM), are proposed in the industry for recording relationships between data, data versions, and tasks, to implement multi-task management and execution. In addition, a producer (producer) linked list for performing an operation on data and a consumer (consumer) linked list for reading data are further mainly distinguished based on the three data structures. To be specific, when a task is to perform an operation on data, the task is a producer relative to the data; or when a task is to read data, the task is a consumer relative to the data. However, when the foregoing three data structures are used, switching needs to be frequently performed between the three data structures when a task is created and when a task ends, to update different fields in different data structures. In addition, because the producer linked list and the consumer linked list are used, when a task is completed, the list needs to be traversed for sequentially updating task information. Consequently, the task cannot be quickly delivered. Because the producer linked list and the consumer linked list are used in the data structures, before a task relationship is established, a relationship between a task and data (whether an operation is to be performed on the data or the data is to be accessed) needs to be first determined, and the task relationship is established based on the relationship between the task and the data. Consequently, a task establishment process is quite complex, and software and hardware overheads are high.

Therefore, when a deep learning network is complex or a large quantity of tasks are included in parallel computing, how to simplify a task scheduling list to improve task scheduling efficiency and increase a task execution speed becomes a problem that needs to be resolved.

### SUMMARY

This application provides a task scheduling method and an electronic apparatus, to simplify a task scheduling list, and therefore improve task scheduling efficiency and increase a task execution speed. To achieve the foregoing objective, the following technical solutions are used in this application.

According to a first aspect, an embodiment of this application provides a task scheduling method. The task scheduling method includes: creating, based on data variables included in a plurality of tasks and a dependency relationship between tasks among the plurality of tasks in terms of data variables, a task information table including the plurality of tasks, and creating a data variable table corresponding to the task information table; and scheduling, based on the task information table and the data variable table, the plurality of tasks to arithmetic units in a processing element array for execution. The task information table records task information of each of the plurality of tasks. The task information includes a task identifier of each task, a quantity of previous tasks on which each task depends, and an identifier of a task depending on each task. The dependency relationship includes at least one of the following: Names of used data variables are the same, and address spaces of the used data variables overlap. The data variable table records a data variable identifier, a task identifier of at least one of the plurality of tasks, and an access mode of the at least one task for a data variable. The access mode includes rewriting the data variable or reading the data variable.

With respect to the depending in this embodiment of this application, if a current task is to rewrite a data variable x, a previous task on which the current task depends is any tasks that have accessed the data variable x among previous tasks, and a task depending on the current task is a task that subsequently needs to access a rewritten data variable x after the current task rewrites the data variable x. If the current task is to read the data variable x, a previous task on which the current task depends is a task that has rewritten the data variable x among previous tasks, and a task depending on the current task is a task that needs to rewrite the data variable x.

In the task scheduling method provided in this embodiment of this application, only a task information table for recording a dependency relationship between tasks and a data variable table for recording a dependency relationship between data and tasks need to be set based on data variables included in a plurality of tasks and a dependency relationship between tasks among the plurality of tasks in terms of data variables. Therefore, compared with the conventional technology, in the task scheduling method provided in this embodiment of this application, a design of a data structure is simplified, complexity of constructing a task information table and a dependency relationship between tasks is reduced, and a storage space for a data structure is saved. In addition, compared with the conventional technology in which memory allocation and a dependency relationship need to be determined, in this embodiment of this application, task scheduling is performed only based on a dependency relationship between tasks among a plurality of tasks in terms of data variables, without determining memory allocation or a dependency relationship, so that task delivery and execution efficiency can be improved. To sum up, in the task scheduling method provided in this embodiment of this application, task scheduling efficiency can be improved.

In a possible implementation, the plurality of tasks use a plurality of data variables, each of the plurality of data variables corresponds to a data variable table, and the creating a data variable table corresponding to the task information table includes: detecting, based on a first data variable used by a first task among the plurality of tasks, whether a first data variable table of the first data variable has been created; and when it is detected that the first data variable table has not been created, creating the first data variable table, where the first data variable table records a data variable identifier of the first data variable, a task identifier of the first task, and an access mode of the first task for the first data variable.

In a possible implementation, each task corresponds to an independent task information table, the task information of each task is recorded in the corresponding task information table, and the creating a task information table including the plurality of tasks includes: creating a first task information table of the first task, where the first task information table records the task identifier of the first task and a first quantity of previous tasks on which the first task depends, and the first quantity is zero.

In a possible implementation, the creating a task information table including the plurality of tasks includes: adding a task identifier of a second task among the plurality of tasks to the first task information table based on a case that the second task uses the first data variable; and creating a second task information table of the second task, where the second task information table records the task identifier of the second task and a second quantity of previous tasks on which the second task depends. When the second task is used to read the first data variable, if a previous task of the second task has not rewritten the first data variable, the second quantity is 0; or if at least one of previous tasks of the second task has rewritten the first data variable, the second quantity is 1. Alternatively, when the second task is used to rewrite the first data variable, the second quantity is the same as a quantity of tasks that are previously used to access the first data variable and that are recorded in the first data variable table, where the accessing includes reading and rewriting.

In a possible implementation, the creating a data variable table corresponding to the task information table includes: adding, to the first data variable table, the task identifier of the second task and an access mode indicating to read or rewrite the first data variable.

In a possible implementation, the creating a data variable table corresponding to the task information table includes: when the second task is used to rewrite the first data variable, deleting the task identifier of the first task and the access mode of the first task for the first data variable.

In a possible implementation, the method further includes: after the first task is executed, updating, based on a first task identifier that depends on the first task and that is recorded in a task information table corresponding to the first task, a quantity of previous tasks, on which a task depends, in a task information table corresponding to the first task identifier.

In a possible implementation, the method further includes: clearing the task identifier of the first task and the access mode of the first task for the first data variable that are recorded in the data variable table.

In a possible implementation, the scheduling, based on the task information table and the data variable table, the plurality of tasks to arithmetic units in a processing element array for execution includes: sending, to an arithmetic unit in the processing element array for execution, a task among the plurality of tasks that depends on zero previous tasks.

According to a second aspect, an embodiment of this application provides an electronic apparatus. The electronic apparatus includes a task scheduler and a processing element array. The task scheduler is configured to: create, based on data variables included in a plurality of tasks and a dependency relationship between tasks among the plurality of tasks in terms of data variables, a task information table including the plurality of tasks, and create a data variable table corresponding to the task information table; and deliver the plurality of tasks to the processing element array based on the task information table and the data variable table. The processing element array includes a plurality of arithmetic units, and the plurality of arithmetic units are configured to process the plurality of tasks. The task information table records task information of each of the plurality of tasks. The task information includes an identifier of each task, a quantity of previous tasks on which each task depends, and an identifier of a task depending on each task. The dependency relationship includes at least one of the following: Names of used data variables are the same, and used data memory spaces overlap. The data variable table records a data variable identifier, a task identifier of at least one of the plurality of tasks, and an access mode of the at least one task for a data variable. The access mode includes rewriting the data variable or reading the data variable.

In a possible implementation, the electronic apparatus further includes: a memory, configured to store the task information table and the data variable table.

In a possible implementation, the electronic apparatus further includes a controller. The controller is configured to: generate the plurality of tasks; store the plurality of tasks to the memory, where each of the plurality of tasks includes a task identifier, a program instruction, a used data variable, and an address space of the used data variable; and send indication information to the task scheduler, where the indication information indicates that the plurality of tasks have been stored to the memory.

In a possible implementation, the plurality of tasks use a plurality of data variables, each of the plurality of data variables corresponds to a data variable table, and when creating the data variable table corresponding to the task information table, the scheduler is specifically configured to: read a first task among the plurality of tasks from the memory, and detect, based on a first data variable used by the first task, whether a first data variable table of the first data variable has been created; and when it is detected that the first data variable table has not been created, create the first data variable table, where the first data variable table records an identifier of the first data variable, a task identifier of the first task, and an access mode of the first task for the first data variable.

In a possible implementation, each task corresponds to an independent task information table, the task information of each task is recorded in the corresponding task information table, and when creating the task information table including the plurality of tasks, the scheduler is specifically configured to create a first task information table of the first task, where the first task information table records the task identifier of the first task and a first quantity of previous tasks on which the first task depends, and the first quantity is zero.

In a possible implementation, when creating the task information table including the plurality of tasks, the scheduler is specifically configured to: read a second task among the plurality of tasks from the memory; add a task identifier of the second task to the first task information table based on a case that the second task uses the first data variable; and create a second task information table of the second task, where the second task information table records the task identifier of the second task and a second quantity of previous tasks on which the second task depends. When the second task is used to read the first data variable, if a previous task of the second task has not rewritten the first data variable, the second quantity is 0; or if at least one of previous tasks of the second task has rewritten the first data variable, the second quantity is 1. Alternatively, when the second task is used to rewrite the first data variable, the second quantity is the same as a quantity of tasks that are previously used to access the first data variable and that are recorded in the first data variable table, where the accessing includes reading and rewriting.

In a possible implementation, when creating the data variable table corresponding to the task information table, the scheduler is specifically configured to add, to the first data variable table, the task identifier of the second task and an access mode indicating to read or rewrite the first data variable.

In a possible implementation, when creating the data variable table corresponding to the task information table, the scheduler is specifically configured to: when the second task is used to rewrite the first data variable, delete the task identifier of the first task and the access mode of the first task for the first data variable.

In a possible implementation, the scheduler is further configured to: after the first task is executed, update, based on a first task identifier that depends on the first task and that is recorded in a task information table corresponding to the first task, a quantity of previous tasks, on which a task depends, in a task information table corresponding to the first task identifier.

In a possible implementation, the scheduler is further configured to clear the task identifier of the first task and the access mode of the first task for the first data variable that are recorded in the data variable table.

In a possible implementation, during the delivering the plurality of tasks to the processing element array, the scheduler is specifically configured to send, to an arithmetic unit in the processing element array for execution, a task among the plurality of tasks that depends on zero previous tasks.

According to a third aspect, an embodiment of this application provides an apparatus. The apparatus includes a memory and a controller. The memory is configured to store a computer program. The controller is configured to invoke all or some of computer programs stored in the memory, to perform the method according to the first aspect.

According to a fourth aspect, an embodiment of this application provides a computer-readable storage medium. The computer-readable storage medium stores a computer program. When being executed by a controller, the computer program is used to implement the method according to the first aspect.

According to a fifth aspect, an embodiment of this application provides a computer program product. When being executed by a controller, the computer program product is used to implement the method according to the first aspect.

It should be understood that the technical solutions in the second aspect to the fifth aspect of this application are consistent with the technical solution in the first aspect of this application. Benefits achieved in the aspects and the corresponding feasible implementations are similar, and details are not described again.

### BRIEF DESCRIPTION OF DRAWINGS

To describe technical solutions in embodiments of this application more clearly, the following briefly describes accompanying drawings for describing embodiments of this application. Clearly, the accompanying drawings in the following descriptions show merely some embodiments of this application, and persons of ordinary skill in the art may still derive other drawings from these accompanying drawings without creative efforts.
FIG. 1 is a diagram of a data structure used for task scheduling in the conventional technology according to an embodiment of this application;
FIG. 2 is a diagram of an architecture of an electronic apparatus 100 according to an embodiment of this application;
FIG. 3 is a flowchart of interaction between components in an electronic apparatus 100 shown in FIG. 2 according to an embodiment of this application;
FIG. 4A, FIG. 4B, FIG. 4C, FIG. 4D, and FIG. 4E are a flowchart of creating a task information table and a data variable table by a scheduler 101 shown in FIG. 2 according to an embodiment of this application;
FIG. 5 is a diagram of a scenario of tasks stored in a memory 103 shown in FIG. 2 according to an embodiment of this application;
FIG. 6A to FIG. 6F are diagrams of scenarios of a process of creating a task information table and a data variable table according to an embodiment of this application;
FIG. 7 is a flowchart of delivering a task and maintaining a task information table and a data variable table by a scheduler 101 shown in FIG. 2 according to an embodiment of this application;
FIG. 8A to FIG. 8C are diagrams of a scenario of delivering a task and maintaining a task information table and a data variable table according to an embodiment of this application;
FIG. 9 is a diagram of another architecture of an electronic apparatus 100 according to an embodiment of this application;
FIG. 10 is a diagram of an architecture of a distributed scenario according to an embodiment of this application;
FIG. 11 is a flowchart of a task scheduling method according to an embodiment of this application; and
FIG. 12 is a flowchart of an apparatus according to an embodiment of this application.

### DESCRIPTION OF EMBODIMENTS

The following clearly and completely describes technical solutions in embodiments of this application with reference to accompanying drawings in embodiments of this application. Clearly, the described embodiments are some but not all of embodiments of this application. All other embodiments obtained by persons of ordinary skill in the art based on embodiments of this application without creative efforts shall fall within the protection scope of this application.

"First", "second", and similar terms mentioned in this specification do not indicate any order, quantity, or significance, but are merely intended to distinguish between different components. Similarly, "a", "an", or a similar term does not indicate a limitation on a quantity either, but indicates existence of at least one.

In embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. To be precise, the term "example", "for example", or the like is intended to present a related concept in a specific manner. In descriptions of embodiments of this application, "a plurality of" means two or more, unless otherwise specified.

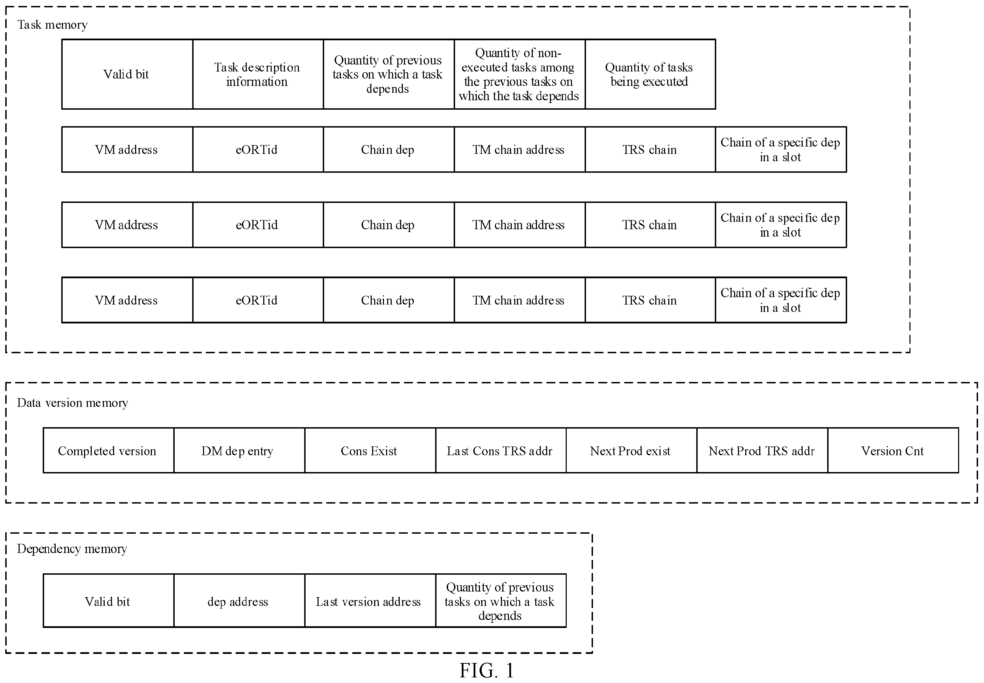

In a conventional task scheduling technology, three data structures, namely, a task memory (task memory, TM), a data version memory (data version memory, VM), and a dependency memory (dependence memory, DM), are usually used for recording relationships between data, data versions, and tasks, to implement multi-task management and execution. FIG. 1 is a diagram of three data structures in a task scheduling table provided in the conventional technology. FIG. 1 shows a task scheduling table of a task. In the TM data structure, the 1^{st} row includes a valid bit (valid bit), task description information (descriptor), a quantity of previous tasks on which the task depends (dep cnt), a quantity of previous tasks that have not been executed (not ready dep cnt), and a quantity of tasks that are being executed (in execution). Each of the 2^{nd} row to the last row corresponds to a piece of input/output data. Information in each of the 2^{nd} row to the last row includes: a VM address (VM addr) pointing to a corresponding VM, a flag (eORTid) indicating a dependency on an input or an output, a flag (Chain dep) indicating whether a dependency linked list exists, a TM chain address (TM chain addr) in a specific slot in a task reservation station (TRS, Task Reservation Station), a TRS chain (TRS chain) in a specific TRS, and a chain of a specific dep (chain Dep) in a slot. In the VM data structure, information includes: a completed version (version ready), an index of a DM entry corresponding to a dependency (DM dep entry), a consumer existence flag (Cons Exist), a TRS address of a previous consumer (Last Cons TRS addr), a next-producer existence flag (Next Prod exist), a TRS address of a next producer (Next Prod TRS addr), and a quantity of versions (Version Cnt). In the DM data structure, information includes a valid bit (valid), a dep address (dep addr), a last version address (last version addr), and a quantity of previous tasks on which the task depends (dep cnt). In addition, in FIG. 1, a producer (producer) linked list for performing an operation on data and a consumer (consumer) linked list for reading data are mainly distinguished. To be specific, when a task is to perform an operation on data, the task is a producer relative to the data; or when a task is to read data, the task is a consumer relative to the data. As shown in FIG. 1, the TM chain addr and the TRS chain in the TM data structure form a consumer chain, the last cons TRS addr in the VM data structure forms a header pointer of the consumer chain, the next prod exist and next prod TRS addr in the VM data structure form a producer chain, and the last version addr in the DM data structure forms a header pointer of the producer chain. Different processes are performed when tasks are created based on different linked lists.

Based on the data structures shown in FIG. 1, when a new task is created, three data structures and corresponding linked lists need to be updated. Details are as follows: When a task 1 is delivered, a TM entry corresponding to the task 1 needs to be created. If the task 1 needs to perform an operation on data A, a DM entry of the data A is found based on a memory space address of the data A, and then a latest producer VM corresponding to the data A is found based on a header pointer of a producer chain in the DM entry. If the task 1 is a consumer task for the data A, a corresponding TM entry is found based on a header pointer of a consumer chain in a found VM, and a corresponding entry of the data A in the TM entry of the task 1 is added to the consumer chain. If the task 1 is a producer task for the data A, a VM entry of the data A needs to be created for the task 1. After the task 1 is completed, a new version of the data A is generated, and a VM entry corresponding to the new data A is added to a producer chain. When a task is completed, three data structures and corresponding linked lists also need to be updated. Details are as follows: When a task 1 is completed, if the task 1 is a producer task for data A, a VM of the task 1 for the data A needs to be first found, a consumer linked list corresponding to the VM is traversed based on information in the VM, and a dependency state of each TM in the linked list is updated. If Cons Exist in the VM is invalid, to be specific, all consumer tasks of the VM are completed, a TM entry of a next producer task for the data A is found based on a producer chain in the VM, and a task corresponding to the TM entry may start to be executed. If the task 1 is a consumer task for the data A, an entry corresponding to the data A in a TM entry of the task 1 is found, and then a corresponding VM is found based on information recorded in the entry, and a version cnt counter in the VM is updated and is decreased by 1. If the counter is decreased to 0, the Cons Exist flag bit should be set to 0.

To sum up, three data structures are used in the conventional technology. When a task is created and when a task ends, switching needs to be frequently performed between the three data structures, to update different fields in different data structures. Similarly, because the producer linked list and the consumer linked list are used, when a task is completed, the list needs to be traversed for sequentially updating task information. Consequently, the task cannot be quickly delivered. Because the producer linked list and the consumer linked list are used in the data structures, before a task relationship is established, a relationship between a task and data (whether an operation is to be performed on the data or the data is to be accessed) needs to be first determined, and the task relationship is established based on the relationship between the task and the data. Consequently, a task establishment process is quite complex, and software and hardware overheads are high. In a task scheduling method provided in embodiments of this application, only a task information table for recording a dependency relationship between tasks and a data variable table for recording a dependency relationship between data and tasks need to be set based on data variables included in a plurality of tasks and a dependency relationship between tasks among the plurality of tasks in terms of data variables. Therefore, compared with the conventional technology, in the task scheduling method provided in this embodiment of this application, a design of a data structure is simplified, complexity of constructing a task information table and a dependency relationship between tasks is reduced, and a storage space for a data structure is saved. In addition, compared with the conventional technology in which memory allocation and a dependency relationship need to be determined, in this embodiment of this application, task scheduling is performed only based on a dependency relationship between tasks among a plurality of tasks in terms of data variables, without determining memory allocation or a dependency relationship, so that task delivery and execution efficiency can be improved. To sum up, in the task scheduling method provided in embodiments of this application, task scheduling efficiency can be improved.

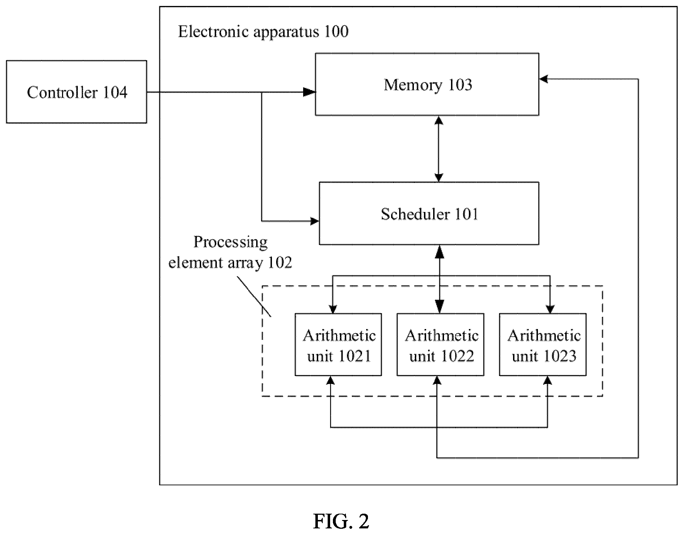

FIG. 2 is a diagram of a hardware structure of an electronic apparatus 100 according to an embodiment of this application. The electronic apparatus 100 may be any type of device, for example, a chip, a chipset, or a circuit board equipped with a chip or a chipset. This is not limited in this embodiment. The chip, the chipset, or the circuit board equipped with the chip or the chipset may operate when driven by suitable software. The electronic apparatus 100 includes a scheduler 101 and a processing element array (Processing Element Array, PE array) 102. A plurality of arithmetic units for executing tasks are arranged in the processing element array 102. FIG. 2 shows an example in which the processing element array 102 includes an arithmetic unit 1021, an arithmetic unit 1022, and an arithmetic unit 1023. It can be understood that the processing element array 102 may include more or fewer arithmetic units. This is set according to a requirement of an application scenario. The scheduler 101 and the plurality of arithmetic units may be integrated into one or more chips, and the one or more chips may be considered as a chipset. Optionally, the scheduler 101 and the plurality of arithmetic units may be integrated into one chip. The scheduler 101 may be a processor dedicated for task scheduling. An implementation form of the scheduler 101 is not limited in this embodiment, provided that the scheduler 101 can generate a task information table and a data variable table and deliver a task to the plurality of arithmetic units based on the task information table and the data variable table. The arithmetic unit 1021, the arithmetic unit 1022, and the arithmetic unit 1023 may include a component for loading a program and executing instruction content, for example, a logic computing unit. The arithmetic unit 1021, the arithmetic unit 1022, and the arithmetic unit 1023 include, for example, but are not limited to, various operation units or dedicated processors. For example, the dedicated processor includes an artificial intelligence processor, a neural network processor, a digital signal processor, or an image processing processor. The electronic apparatus 100 may further include one or more other components, for example, a memory 103. The memory 103 may include, for example, a nonvolatile memory, for example, a component for storing an instruction program and data, such as a dynamic random access memory (DRAM). The memory 103 may be configured to store executable programs and data variables of tasks. In addition, the memory 103 is further configured to store a task information table and a data variable table that are generated by the scheduler 101. The memory 103 may be selectively integrated into one chip together with the scheduler 101 and a plurality of processors, or may be disposed outside the chip. It should be noted that FIG. 2 shows only one memory, namely, the memory 103. In a possible implementation, the memory 103 may include a plurality of memories, and the plurality of memories may be integrated memories, or may be a plurality of discrete memories. When the memory 103 includes a plurality of memories, one memory is configured to store executable programs and data variables of tasks, and another memory is configured to store a task information table and a data variable table. Further, when the memory 103 includes a plurality of memories, the memory for storing the executable programs and the data variables of the tasks may be selectively disposed outside the chip of the scheduler 101, and the memory for storing the task information table and the data variable table may be selectively integrated into one chip together with the scheduler 101. In addition, the electronic apparatus 100 further selectively includes a controller 104, and the controller 104 is configured to generate a plurality of tasks. Therefore, the scheduler 101 may generate a task information table and a data variable table based on the plurality of tasks, to perform task scheduling. FIG. 2 shows an example in which the electronic apparatus 100 does not include the controller 104. The controller 104 may communicate with the memory 103 and the scheduler 101 in the electronic apparatus 100 in a wired or wireless manner, to store the plurality of tasks to the memory 103, and send, to the scheduler 101, indication information indicating that the plurality of tasks are stored in the memory 103. Each of the plurality of tasks includes a task identifier, a program instruction, a used data variable, and an address space of the used data variable. The wired manner is, for example, an electronic circuit. The wireless manner includes, for example, but is not limited to, Bluetooth, Wi-Fi, or a cellular network. The electronic apparatus 100 provided in this embodiment of this application may be used in a plurality of scenarios. This embodiment of this application shows the following three scenarios as an example: a terminal, artificial intelligence, and a cloud server; but is not intended to limit the solution. It can be understood that the electronic apparatus 100 provided in this embodiment of this application may be further used in more scenarios.

In a first scenario, the electronic apparatus 100 shown in FIG. 2 may be used in a terminal device. The terminal device may be user equipment (user equipment, UE), for example, various types of portable terminal devices such as a mobile phone, a tablet computer, or a wearable device (for example, a smartwatch). When the electronic apparatus 100 is located in a terminal, the controller 104 may be, for example, a central processing unit (central processing unit, CPU). In this scenario, components in the electronic apparatus 100 and the controller 104 may be integrated into one or more chips. When the controller 104 and the components in the electronic apparatus 100 are integrated into one chip, the chip is also referred to as a system on a chip (system on a chip, SOC).

In a second scenario, the electronic apparatus 100 shown in FIG. 2 may be used in an artificial intelligence scenario, for example, an autonomous vehicle. In this scenario, the electronic apparatus 100 and the controller 104 may be integrated into different chips. Optionally, the electronic apparatus 100 and the controller 104 may be separately disposed in different devices. In an example, the controller 104 may be UE, and the electronic apparatus 100 is disposed in an autonomous vehicle. The controller 104 delivers a plurality of tasks to the memory 103 in the electronic apparatus 100 through a wireless connection to the electronic apparatus 100, so that the scheduler 101 in the electronic apparatus 100 performs task scheduling based on the plurality of tasks, and executes the plurality of tasks based on a scheduling result. In another example, the controller 104 may alternatively be disposed in an autonomous vehicle. In this scenario, the controller 104 may be a CPU.

In a third scenario, the electronic apparatus 100 shown in FIG. 2 may alternatively be used in a cloud server. In this scenario, the electronic apparatus 100 and the controller 104 may be integrated into different chips. Optionally, the electronic apparatus 100 and the controller 104 may be separately disposed in different devices.

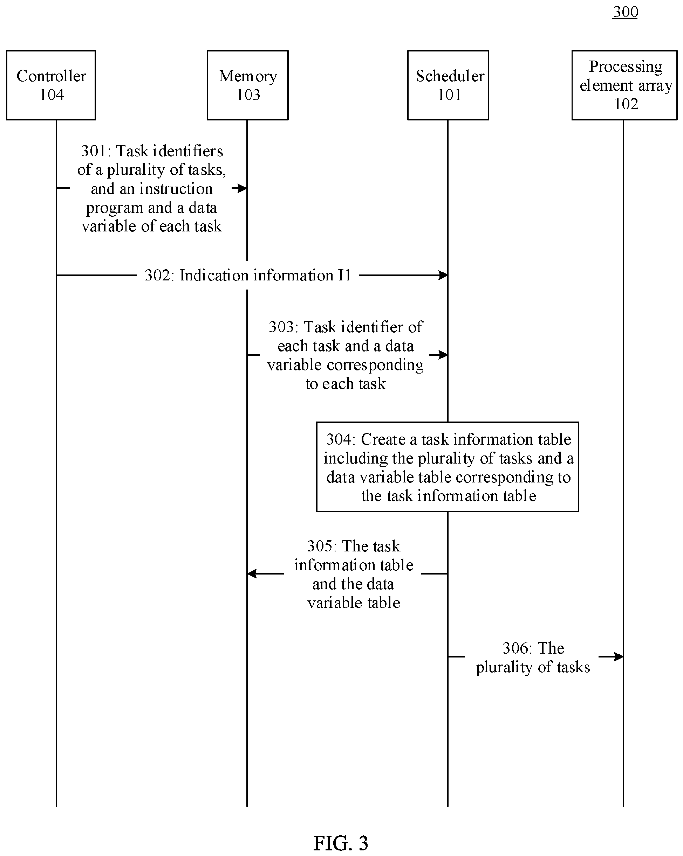

Based on the hardware structure of the electronic apparatus 100 shown in FIG. 2, the following describes an exchange relationship between components by using an interaction process shown in FIG. 3. FIG. 3 shows an interaction process 300 between components in the electronic apparatus 100. The interaction process 300 includes the following steps.

Step 301: The controller 104 generates a plurality of tasks, and stores task identifiers of the plurality of tasks and an instruction program and a data variable of each task to the memory 103. Step 302: The controller 104 sends indication information I1 to the scheduler 101, where the indication information I1 indicates that the plurality of tasks are stored in the memory 103. In this embodiment of this application, an address space that is in the memory 103 and that is used to store instruction programs and data of the plurality of tasks may be obtained through pre-division. After generating the plurality of tasks, the controller 104 may store the address space for the instruction programs and the data of the plurality of tasks into the address space obtained through pre-division. In addition, an address space for storing the instruction program and the data variable that correspond to each task may be randomly allocated. In this case, when sending the indication information I1, the controller 104 further needs to send address space information to the scheduler 101. In this embodiment of this application, the data variable may include a data variable identifier and an address space corresponding to the data variable.

Step 303: The scheduler 101 reads, from the memory 103, a task identifier of each of the plurality of tasks and a data variable corresponding to the task. Specifically, when the address space for storing the instruction programs and the data of the plurality of tasks in the memory 103 is preset, the scheduler 101 reads the task identifier of each task and the data variable corresponding to the task from the preset storage space. When the address space for storing the instruction programs and the data of the plurality of tasks in the memory 103 is randomly allocated, the scheduler 101 reads, based on the address space information obtained from the controller 104, the task identifier of each task and the data variable corresponding to the task from the address space information. Step 304: The scheduler 101 creates, based on data variables included in the plurality of tasks and a dependency relationship between tasks among the plurality of tasks in terms of data variables, a task information table including the plurality of tasks, and creates a data variable table corresponding to the task information table. The task information table records task information of each of the plurality of tasks. The task information includes an identifier of each task, a quantity of previous tasks on which each task depends, and an identifier of a task depending on each task. The dependency relationship includes at least one of the following: Names of used data variables are the same, and address spaces corresponding to the used data variables at least partially overlap. The data variable table records one of a data variable identifier and an address space corresponding to the data variable, and access modes of the plurality of tasks for the data variable. The access mode includes performing an operation on the data variable or reading the data variable. Step 305: Store the generated task information table and data variable table to the memory 103. Step 306: Respectively deliver, based on the task information table and the data variable table, the plurality of tasks to arithmetic units in the processing element array 102 for execution. It should be noted that, with respect to the depending in this embodiment of this application, if a current task is to rewrite a data variable x, a previous task on which the current task depends is all tasks that have accessed the data variable x among previous tasks, and a task depending on the current task is a task that subsequently needs to access a rewritten data variable x after the current task rewrites the data variable x. If the current task is to read the data variable x, a previous task on which the current task depends is a task that has rewritten the data variable x among previous tasks, and a task depending on the current task is a task that needs to rewrite the data variable x.

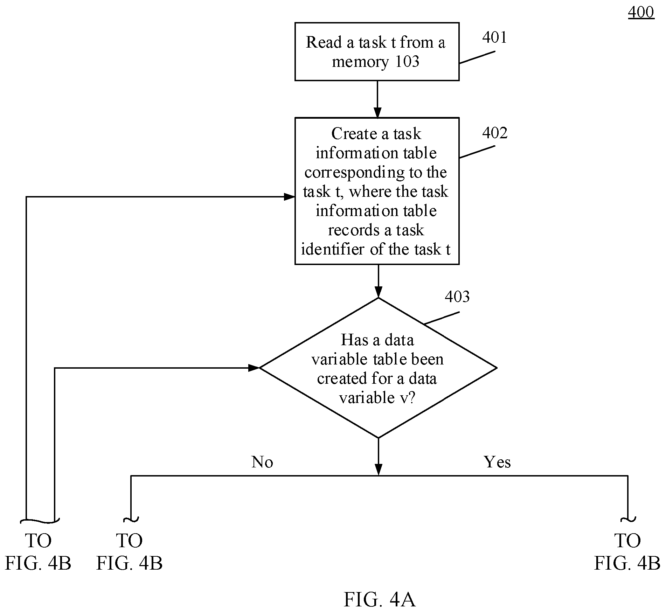

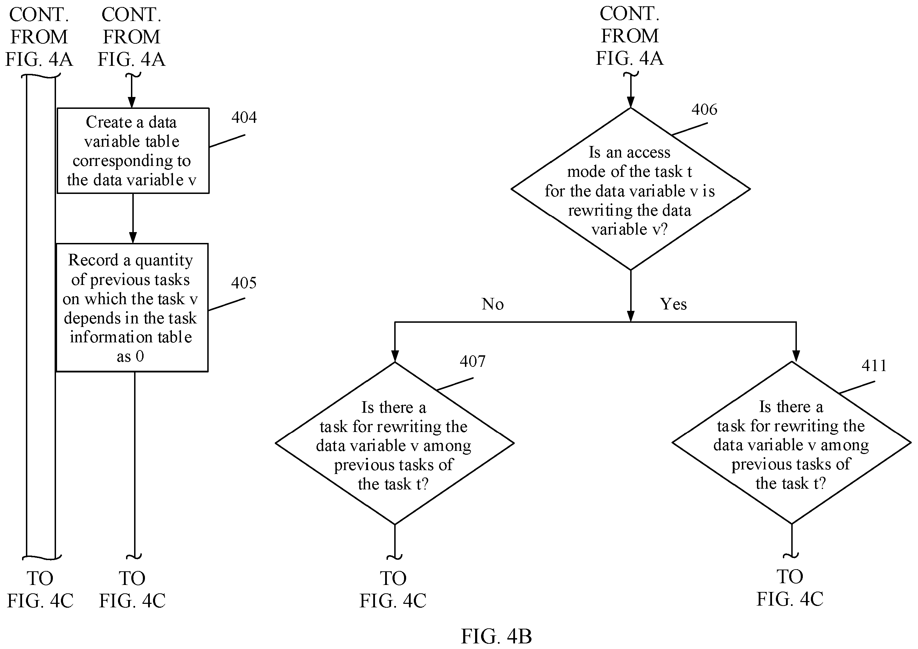

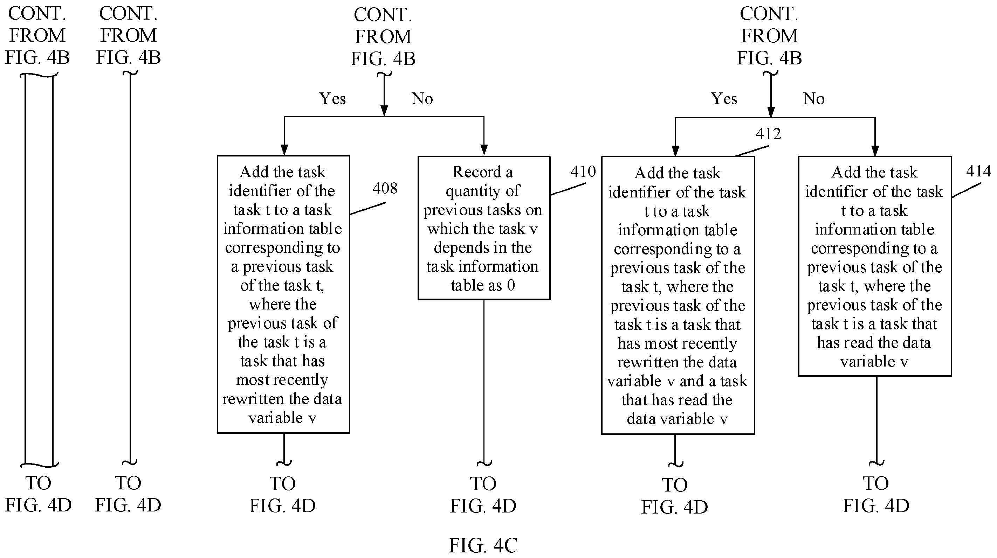

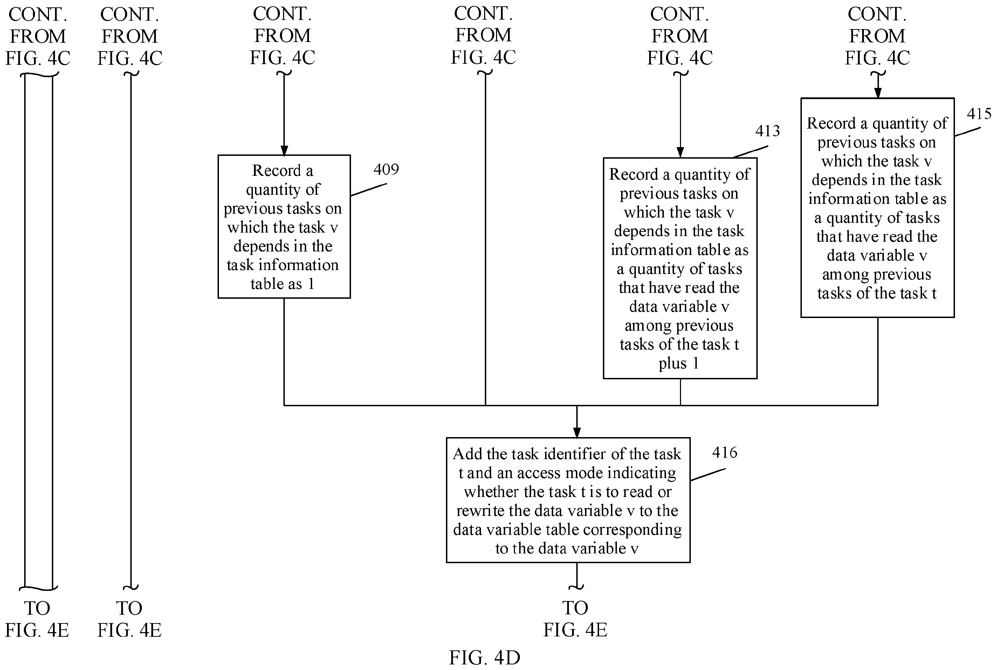

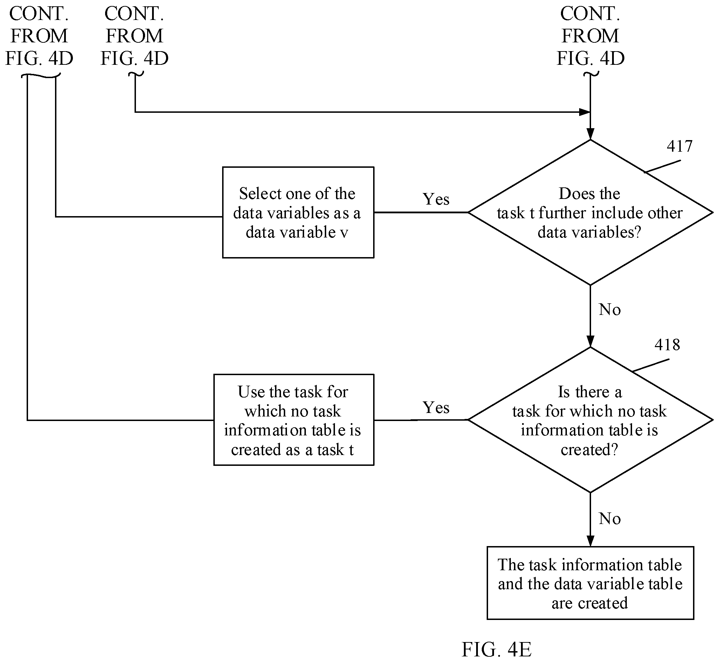

In this embodiment of this application, each of the plurality of tasks corresponds to one task information table, and each task information table is independently established based on a dependency relationship between tasks in terms of data variables. Based on the hardware structure of the electronic apparatus 100 shown in FIG. 2 and the interaction process between components shown in FIG. 3, the following describes in detail how the scheduler 101 creates a task information table and a data variable table with reference to FIG. 4A, FIG. 4B, FIG. 4C, FIG. 4D, and FIG. 4E. FIG. 4A, FIG. 4B, FIG. 4C, FIG. 4D, and FIG. 4E show a process 400 of creating a task information table and a data variable table. The process 400 includes the following steps.

Step 401: Read a task t from the memory 103 based on the indication information I1 that is sent by the controller 104 and that indicates that the plurality of tasks are stored in the memory 103.

Step 402: Create a task information table corresponding to the task t, where the task information table records a task identifier of the task t.

Step 403: Detect, based on a data variable v among at least one data variable included in the task t, whether a corresponding data variable table has been created for the data variable v. When it is detected that no data variable table corresponding to the data variable v has been created, perform step 404, step 405, step 417, and step 418. When it is detected that a data variable table corresponding to the data variable v has been created, perform step 406.

Step 404: Create a data variable table corresponding to the data variable v, where the data variable table records a data variable identifier of the data variable v, the task identifier of the task t, and an access mode of the task t for the data variable v, and the access mode includes reading the data variable v or rewriting the data variable v.

Step 405: Record a quantity of previous tasks on which the task t depends in the task information table as 0.

Step 406: Determine whether the access mode of the task t for the data variable v is rewriting the data variable v. When it is determined that the access mode of the task t for the data variable v is reading the data variable v, perform step 407 to step 410, and step 416 to step 418. When it is determined that the access mode of the task t for the data variable v is rewriting the data variable v, perform step 411 to step 418.

Step 407: Detect whether there is a task for rewriting the data variable v among previous tasks of the task t. If there is such a task, perform step 408 and step 409. If there is no such a task, perform step 410.

Step 408: Add the task identifier of the task t to a task information table corresponding to a previous task of the task t, where the previous task of the task t is a task that has most recently rewritten the data variable v.

Step 409: Record a quantity of previous tasks on which the task t depends in the task information table as 1.

Step 410: Record a quantity of previous tasks on which the task t depends in the task information table as 0.

Step 411: Detect whether there is a task for rewriting the data variable v among previous tasks of the task t. If there is such a task, perform step 412 and step 413. If there is no such a task, perform step 414 and step 415.

Step 412: Add the task identifier of the task t to a task information table corresponding to a previous task of the task t, where the previous task of the task t is a task that has most recently rewritten the data variable v and a task that has read the data variable v.

Step 413: Record a quantity of previous tasks on which the task t depends in the task information table as a quantity of tasks that have read the data variable v among previous tasks of the task t plus 1.

Step 414: Add the task identifier of the task t to a task information table corresponding to a previous task of the task t, where the previous task of the task t is a task that has read the data variable v.

Step 415: Record a quantity of previous tasks on which the task t depends in the task information table as a quantity of tasks that have read the data variable v among previous tasks of the task t.

Step 416: Add the task identifier of the task t and an access mode indicating whether the task t is to read or rewrite the data variable v to the data variable table corresponding to the data variable v. In a possible implementation, in this step, when the task t is to rewrite the data variable v, before an access mode indicating that the task t is to rewrite the data variable v is added to the data variable table corresponding to the data variable v, the method may further include a step of clearing task information of a previous task recorded in the data variable table corresponding to the data variable v.

Step 417: Detect whether the task t further includes other data variables. When the task t further includes other data variables, select one of the data variables as a data variable v, and continue to perform step 403 to step 417. When the task t does not include other data variables, perform step 418.

Step 418: Detect whether corresponding task information tables have been created for all tasks. When there is a task for which no task information table is created, use the task for which no task information table is created as a task t, and continue to perform step 402 to step 418.

It can be learned from the process 400 shown in FIG. 4A, FIG. 4B, FIG. 4C, FIG. 4D, and FIG. 4E that, in this embodiment of this application, only a task information table and a data variable table need to be created based on data variables included in a plurality of tasks and a dependency relationship between tasks among the plurality of tasks in terms of data variables. Compared with the conventional technology, according to the electronic apparatus 100 provided in this embodiment of this application, a design of a data structure in task scheduling is simplified, complexity of constructing a task information table and a dependency relationship between tasks is reduced, and a storage space is saved. Therefore, according to the electronic apparatus 100 provided in this embodiment of this application, efficiency of creating task scheduling information can be improved.

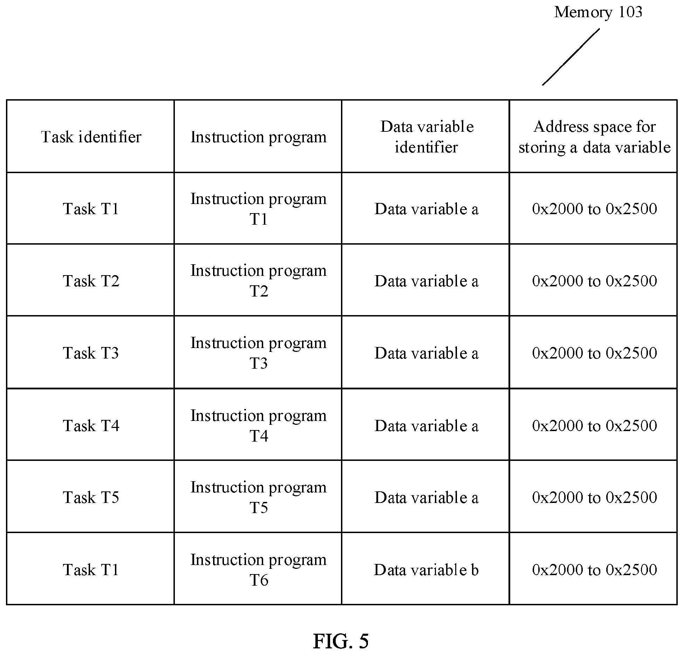

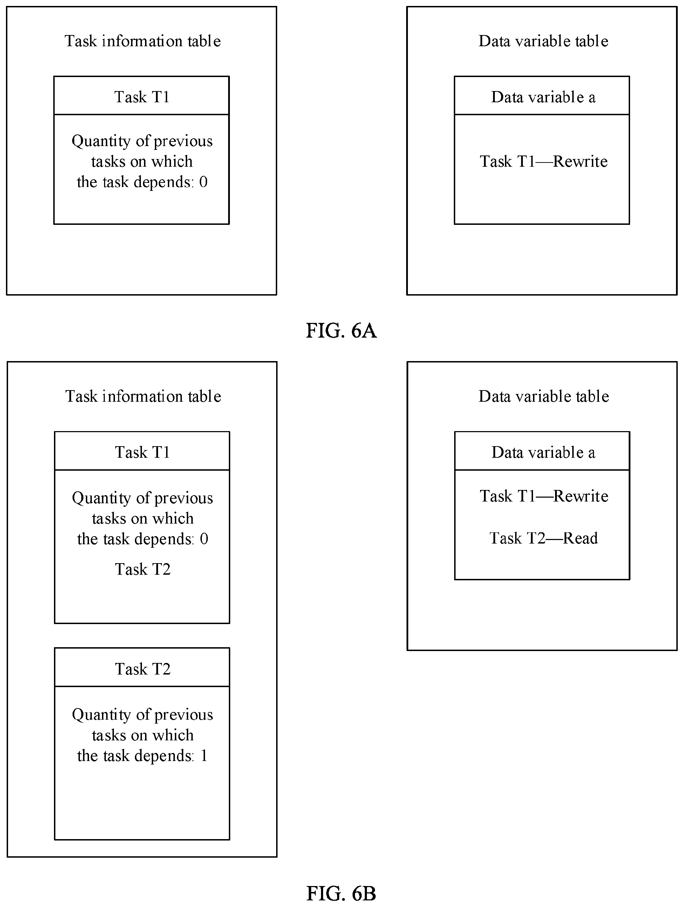

Based on the hardware structure of the electronic apparatus 100 shown in FIG. 2 and the interaction process between components shown in FIG. 3, the following describes in more detail how the scheduler 101 creates a task information table and a data variable table by using a task T1 to a task T6 stored in the memory 103 shown in FIG. 5 as specific examples and with reference to application scenarios shown in FIG. 6A to FIG. 6E. FIG. 5 shows an example in which the memory 103 stores the task T1 to the task T6. It can be learned from FIG. 5 that each task stored in the memory 103 includes a task identifier, an instruction program, a data variable identifier, and an address space for storing a data variable. The instruction program indicates whether the data variable is an input of the task or an output of the task. When the instruction program indicates that the data variable is an input of the task, a read operation is to be performed on the data variable. When the instruction program indicates that the data variable is an output of the task, a rewrite operation is to be performed on the data variable. FIG. 5 shows an example in which all the task T1 to the task T6 include an operation on a data variable a. The task T1 is used to rewrite the data variable a, the task T2 and the task T3 are used to read the data variable a, the task T4 is used to rewrite the data variable a, and the task T5 is used to read the data variable a. An address space corresponding to the data variable a is 0x2000 to 0x2500. In addition, FIG. 5 further shows an example in which the task T6 includes an operation on a data variable b. The task T6 is used to read the data variable b, and an address space corresponding to the data variable b is also 0x2000 to 0x2500.

A creation process of creating a task information table including the task T1 to the task T6 and a data variable table are described in more detail based on the task T1 to the task T6 stored in the memory 103 shown in FIG. 5 and with reference to the scenarios shown in FIG. 6A to FIG. 6F. The creation process includes the following steps.

Create a task information table corresponding to the task T1 and a data variable table corresponding to the data variable a. Specifically, first, the scheduler 101 reads the task T1 from the memory 103 based on the indication information I1 that is sent by the controller 104 and that indicates that the plurality of tasks are stored in the controller 103, and creates the task information table corresponding to the task T1, where the task information table records a task identifier of the task T1. Then the scheduler 101 creates the data variable table corresponding to the data variable a, where the data variable table records a data variable identifier of the data variable a, the task identifier of the task T1, and indication information indicating that the task T1 is used to rewrite the data variable a. Finally, a quantity of previous tasks on which the task T1 depends is set to 0. A task information table and a data variable table that are created in this step are shown in FIG. 6A.

Create a task information table corresponding to the task T2. Specifically, first, the task T2 is read from the memory 103, and the task information table corresponding to the task T2 is created, where the task information table records a task identifier of the task T2. Then the task identifier of the task T2 and indication information indicating that the task T2 is used to read the data variable a are added to the data variable table corresponding to the data variable a. Then the task identifier of the task T2 is added to the task information table corresponding to the task T1. Finally, a quantity of previous tasks on which the task T2 depends is set to 1. A task information table and a data variable table that are created in this step are shown in FIG. 6B.

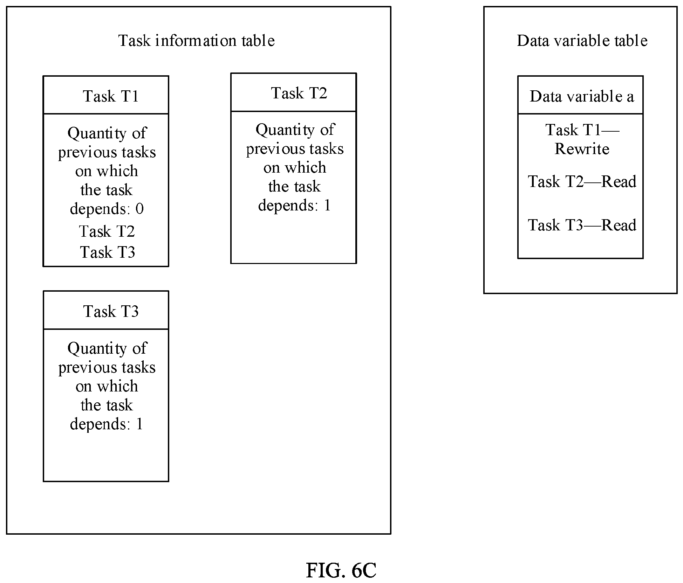

Create a task information table corresponding to the task T3. Specifically, first, the task T3 is read from the memory 103, and the task information table corresponding to the task T3 is created, where the task information table records a task identifier of the task T3. Then the task identifier of the task T3 and indication information indicating that the task T3 is used to read the data variable a are added to the data variable table corresponding to the data variable a. Then the task identifier of the task T3 is added to the task information table corresponding to the task T1. Finally, a quantity of previous tasks on which the task T3 depends is set to 1. A task information table and a data variable table that are created in this step are shown in FIG. 6C.

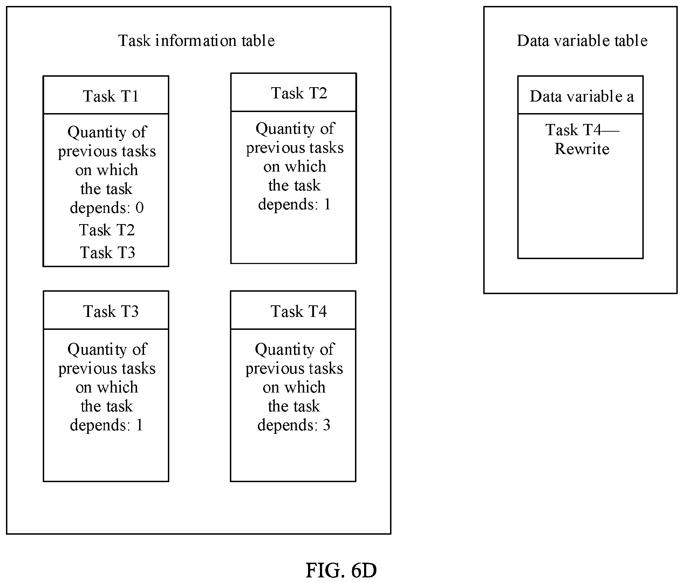

Create a task information table corresponding to the task T4. Specifically, first, the task T4 is read from the memory 103, and the task information table corresponding to the task T4 is created, where the task information table records a task identifier of the task T4. Then the task identifier corresponding to the task T4 is added to the task information table corresponding to the task T1, the task information table corresponding to the task T2, and the task information table corresponding to the task T3. Then all information about the task T1 to the task T3 that is recorded in the data variable table a is deleted, and the task identifier of the task T4 and indication information indicating that the task T4 is used to rewrite the data variable a are added to the data variable table corresponding to the data variable a. Finally, a quantity of previous tasks on which the task T4 depends is set to 3. A task information table and a data variable table that are created in this step are shown in FIG. 6D.

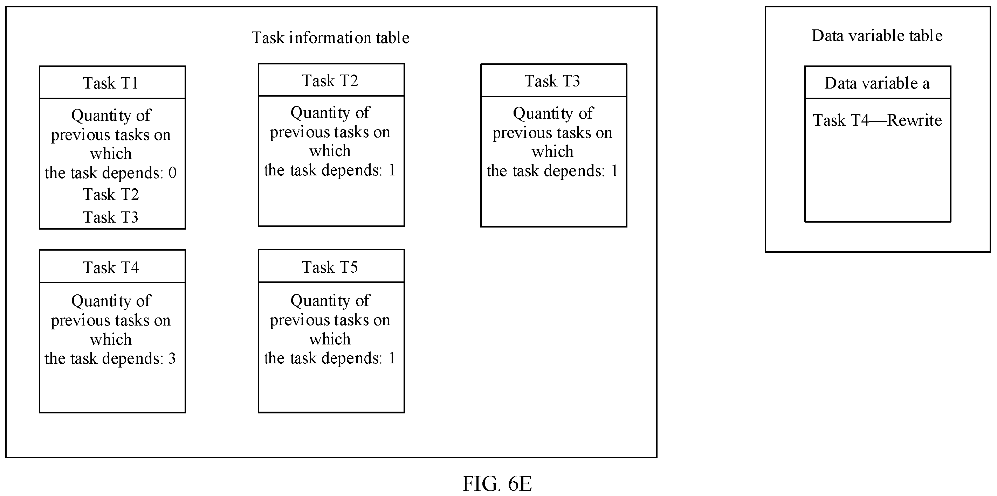

Create a task information table corresponding to the task T5. Specifically, first, the task T5 is read from the memory 103, and the task information table corresponding to the task T5 is created, where the task information table records a task identifier of the task T5. Then the task identifier of the task T5 and indication information indicating that the task T5 is used to read the data variable a are added to the data variable table corresponding to the data variable a. Then the task identifier of the task T5 is added to the task information table corresponding to the task T4. Finally, a quantity of previous tasks on which the task T4 depends is set to 1. A task information table and a data variable table that are created in this step are shown in FIG. 6E.

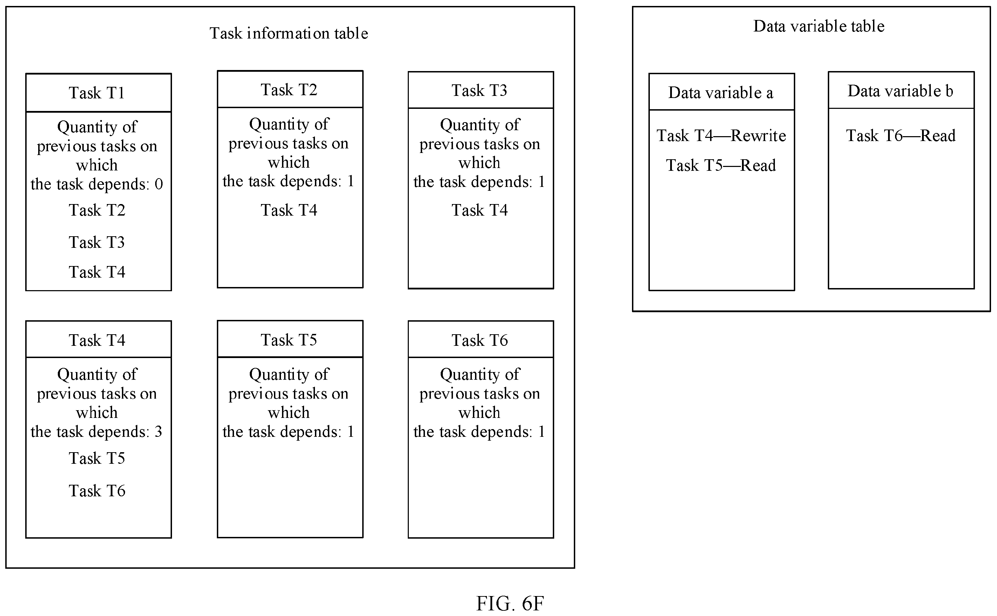

Create a task information table corresponding to the task T6 and a data variable table corresponding to the data variable b. Specifically, first, the task T6 is read from the memory 103, and the task information table corresponding to the task T6 is created, where the task information table records a task identifier of the task T6. Then the data variable table corresponding to the data variable b is created, where the data variable table records a data variable identifier of the data variable b, the task identifier of the task T6, and indication information indicating that the task T6 is used to read the data variable b. It can be learned from FIG. 5 that the address space of the data variable b is the same as the address space of the data variable a, and the task T6 has a dependency relationship with the task T5. Then the task identifier of the task T6 is added to the task information table corresponding to the task T4. Finally, a quantity of previous tasks on which the task T6 depends is set to 1. A task information table and a data variable table that are created in this step are shown in FIG. 6F.

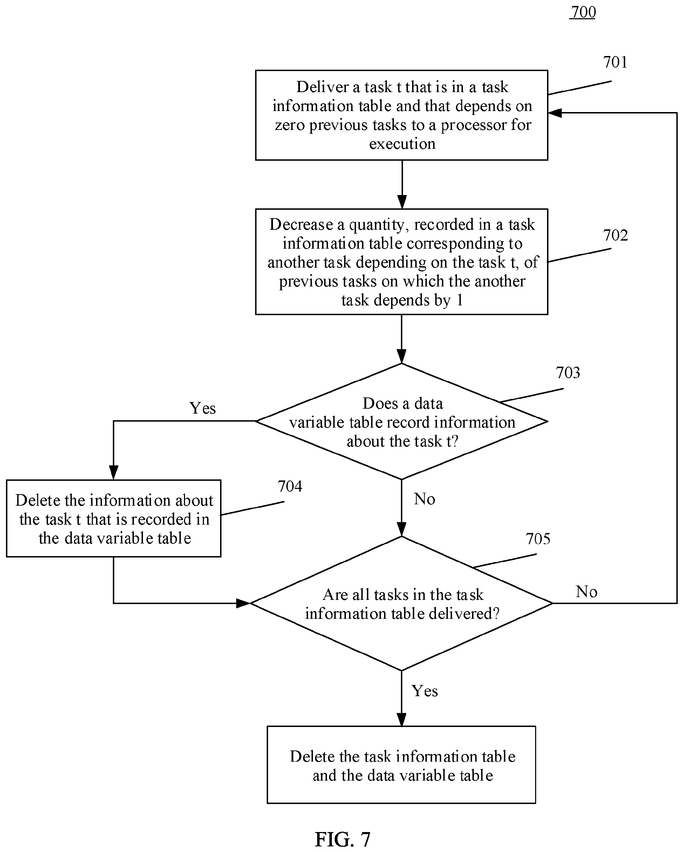

With reference to the embodiments shown in FIG. 4A to FIG. 6F, the foregoing describes creation of the task information table and the data variable table in embodiments of this application. In embodiments of this application, the scheduler 101 may further deliver, based on the task information table, tasks to 1021, the arithmetic unit 1022, and the arithmetic unit 1023 for execution, and modify information in the task information table and the data variable table after delivering the tasks. Further, FIG. 7 shows a process 700 in which the scheduler 101 delivers a task based on a task information table and updates the task information table and a data variable table according to an embodiment of this application. The process 700 includes the following steps.

Step 701: Deliver a task t that is in a task information table and that depends on zero previous tasks to an arithmetic unit for execution.

Step 702: Decrease a quantity, recorded in a task information table corresponding to another task depending on the task t, of previous tasks on which the another task depends by 1.

Step 703: Determine whether a data variable table records information about the task t. When the data variable table records information about the task t, perform step 704 and step 705. When the data variable table records no information about the task t, perform step 705.

Step 704: Delete the information about the task t that is recorded in the data variable table, where the task information includes a task identifier of the task t and an access mode of the task t for a data variable.

Step 705: Detect whether all tasks in the task information table are delivered. When there is an undelivered task, perform step 701 to step 705. When all tasks in the task information table are delivered, delete the task information table and the data variable table.

It should be noted that, in the embodiment shown in FIG. 7, the information about the task t that is recorded in the data variable table is immediately deleted after the task t is delivered to the arithmetic unit for execution. In a possible implementation, step 704 may alternatively be skipped, and data variable tables stored in the memory 103 are deleted together after all tasks are executed. In addition, in a possible implementation of this embodiment of this application, a task information table that corresponds to the task t and that is stored in the memory 103 may be further deleted after the task t is executed. In another possible implementation, the task information table corresponding to the task t may alternatively not be deleted after the task t is executed, and task information tables stored in the memory 103 are deleted together after all tasks are executed. In this embodiment of this application, a manner of deleting a task information table, a manner of deleting task information recorded in a data variable table, and a manner of deleting a data variable table are not specifically limited, and are set based on an application scenario.

It can be learned from the process 700 that, in this embodiment of this application, the scheduler 101 performs task scheduling based on a task information table. Compared with the conventional technology in which memory allocation and a dependency relationship need to be determined, in this embodiment of this application, task scheduling is performed only based on a dependency relationship between tasks among a plurality of tasks in terms of data variables, without determining memory allocation or a dependency relationship, so that task delivery and execution efficiency can be improved.

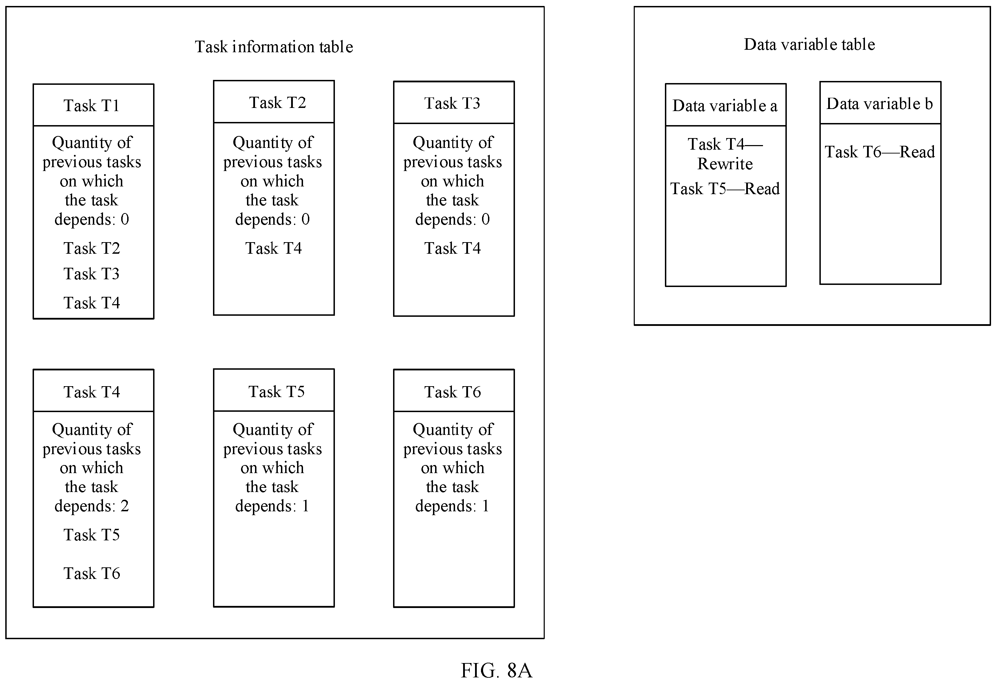

By using the created task information table and data variable table in FIG. 6F as an example and with reference to scenarios shown in FIG. 8A to FIG. 8C, the following describes in more detail how the scheduler 101 delivers a task and modifies a task scheduling table and a data variable table.

It can be learned from FIG. 6F that a quantity of previous tasks on which the task T1 depends in a task scheduling table is 0, and the scheduler 101 delivers the task T1 to a processor for execution.

After the task T1 is executed, the scheduler 101 modifies a quantity, recorded in the task T2 and the task T3, of previous tasks on which the task depends to 0, modifies a quantity, recorded in the task T4, of previous tasks on which the task depends to 2, and then delivers the task T2 and the task T3 to the processor for execution. A task scheduling table and a data variable table that are obtained in this step are shown in FIG. 8A.

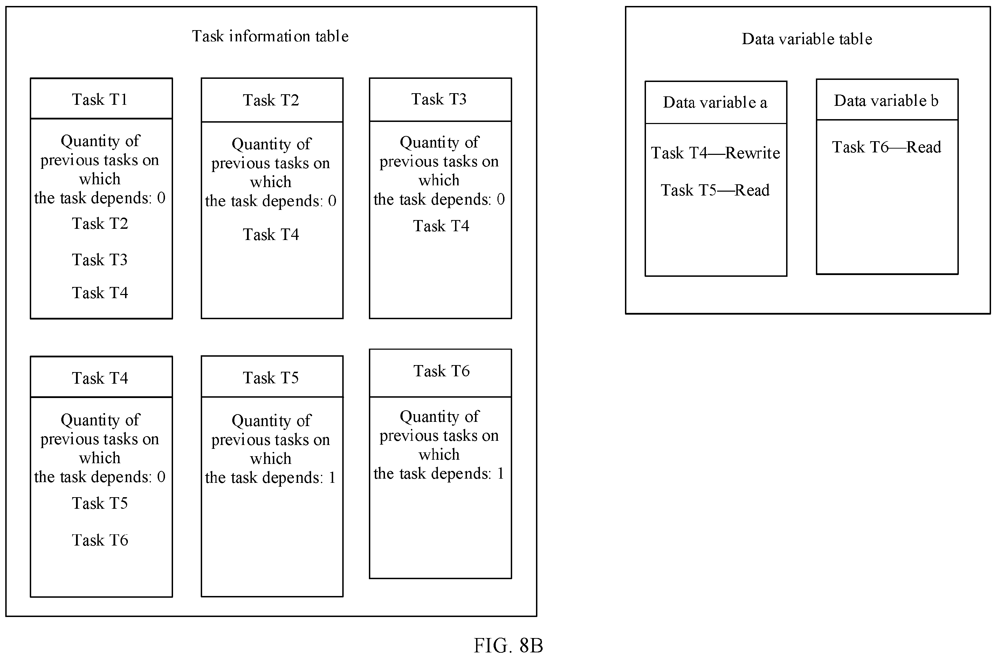

After the task T2 and the task T3 are executed, the scheduler 101 modifies the quantity, recorded in the task T4, of previous tasks on which the task depends to 0, and then delivers the task T4 to the processor for execution. A task scheduling table and a data variable table that are obtained in this step are shown in FIG. 8B.

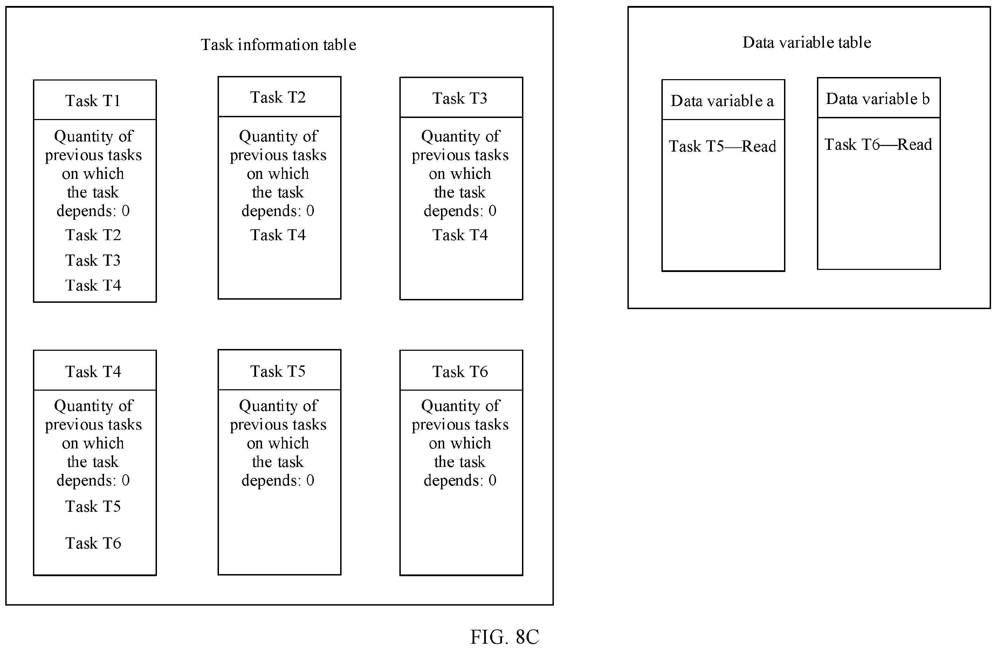

After the task T4 is executed, the scheduler 101 deletes information about the task T4 that is recorded in the data variable table corresponding to the data variable a, modifies a quantity, recorded in the task T5 and the task T6, of previous tasks on which the task depends to 0, and then delivers the task T5 and the task T6 to the processor for execution. A task scheduling table and a data variable table that are obtained in this step are shown in FIG. 8C.

After the task T5 and the task T6 are executed, the scheduler 101 deletes the task information table, the data variable table corresponding to the data variable a, and the data variable table corresponding to the data variable b.

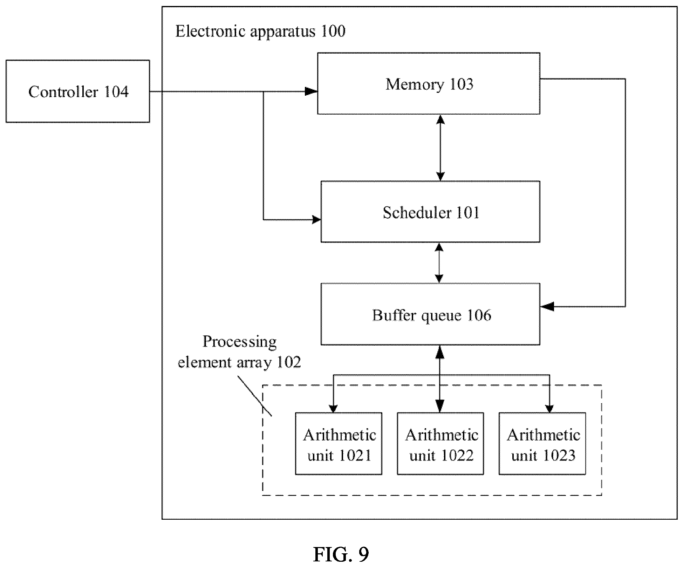

In this embodiment of this application, the scheduler 101 may deliver, in a plurality of manners, a task to the processor in the processing element array 102 for execution. In a first possible implementation, when the processing element array 102 includes an idle processor, the scheduler 101 provides a to-be-preferentially-delivered task in the memory 103 for the idle processor in the processing element array 102 based on a priority sequence of tasks sorted in the task information table, so that the processor executes the task. In a second possible implementation, a buffer queue 106 may be further disposed in the electronic apparatus 100, and the buffer queue may be a buffer maintained by the scheduler 101, as shown in FIG. 9. FIG. 9 is a diagram of another hardware structure of the electronic apparatus 100. In FIG. 9, the buffer queue 106 is disposed between the scheduler 101 and the processing element array 102. The buffer queue 104 may be integrated in one chip together with the scheduler 101 and the processing element array 102. The scheduler 101 may transmit to-be-delivered tasks from the memory 103 to the buffer queue 106 in a priority sequence. After a processor in the processing element array 102 completes execution of a task that is being executed, the processor reads a task from the buffer queue 106 to continue to execute the task.

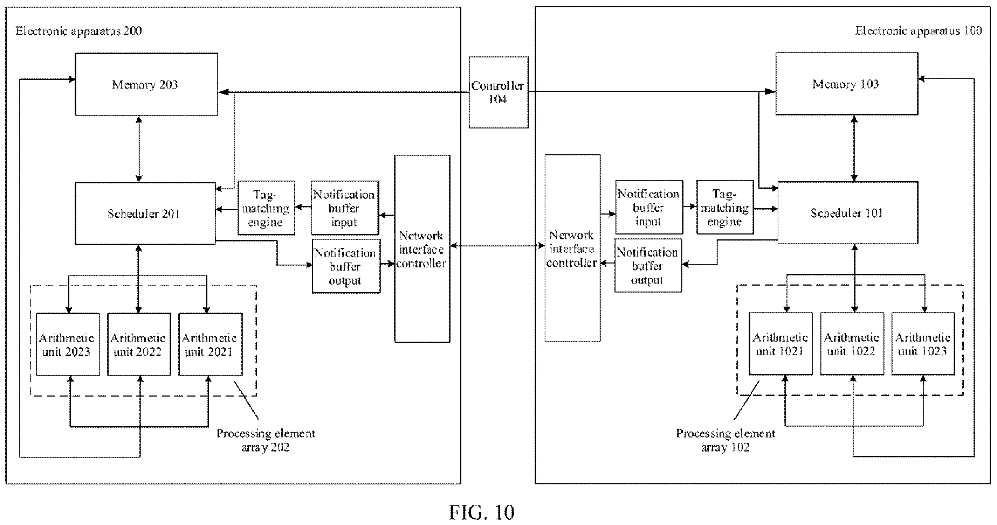

The electronic apparatus 100 and task scheduling performed by the scheduler 101 in the electronic apparatus 100 are shown in the embodiments shown in FIG. 2 to FIG. 9. In a possible implementation, the task scheduling method provided in embodiments of this application may be further used in a distributed cluster. The distributed cluster may include a plurality of electronic apparatuses 100 shown in FIG. 1. A distributed cluster architecture is shown in FIG. 10. The figure shows an example in which the distributed cluster includes two electronic apparatuses 100 shown in FIG. 2: an electronic apparatus 100 and an electronic apparatus 200. Schedulers in the electronic apparatuses are connected to the controller 104. In addition, the schedulers in the electronic apparatuses further communicate with each other through a network interface controller (NIC, network interface controller). More specifically, the schedulers in the electronic apparatuses may communicate with each other wirelessly or through an electronic circuit. The wireless communication may include but is not limited to Bluetooth, Wi-Fi, or a cellular network. When a scheduler 101 and a scheduler 201 communicate with each other through an electronic circuit, a notification buffer (notify buffer) and a tag-matching engine (Tag-Matching Engine) in parallel computing may be further disposed in each electronic apparatus. FIG. 10 shows an example in which the scheduler 101 and the scheduler 201 are connected to each other through an electronic circuit for communication. It can be learned from FIG. 10 that, in each electronic apparatus, an input line and an output line are disposed between the NIC and the scheduler, a notification buffer output is set on the output line, and a notification buffer input and the tag-matching engine are set on the input line. The network interface controller, the notification buffer, and the tag-matching engine cooperate with each other to implement information exchange between two schedulers.

Based on the distributed cluster architecture shown in FIG. 10, the controller 104 separately allocates generated tasks to the electronic apparatus 100 and the electronic apparatus 200 for execution. In addition, when allocating tasks to each electronic apparatus, the controller 104 further notifies the electronic apparatus 100 and the electronic apparatus 200 of data variables included in tasks to be executed in each electronic apparatus and a sequence of tasks to be executed in each electronic apparatus. Therefore, the electronic apparatus 100 and the electronic apparatus 200 each create a task information table and a data variable table according to the process 400 shown in FIG. 4A, FIG. 4B, FIG. 4C, FIG. 4D, and FIG. 4E. In addition, the electronic apparatus 100 and the electronic apparatus 200 each further deliver, based on the created task information table and data variable table and according to the process 700 shown in FIG. 7, a task to a processor in a processing element array for execution. Usually, in a parallel computing scenario, a data variable input used by a task executed on the electronic apparatus 100 may depend on a data variable output in a task executed on the electronic apparatus 200. Similarly, a data variable input used by a task executed on the electronic apparatus 200 may depend on a data variable output in a task executed on the electronic apparatus 100. It is assumed that a task T8 executed on the electronic apparatus 200 depends on a task T7 executed on the electronic apparatus 100. After the electronic apparatus 100 executes the task T7, the scheduler 101 in the electronic apparatus 100 buffers information f indicating that the task T7 is completed to a notification buffer output. A network interface controller in the electronic apparatus 100 transmits the information f stored in the notification buffer output to the electronic apparatus 200. A network interface controller in the electronic apparatus 200 buffers the received information f to a notification buffer input. A tag-matching engine in the electronic apparatus 200 decreases, by 1 based on the information f, a quantity, recorded in a task information table corresponding to the task T8, of previous tasks on which the task T8 depends. Similarly, when a data variable input used by a task executed on the electronic apparatus 100 depends on a data variable output in a task executed on the electronic apparatus 200, after the electronic apparatus 200 completes a task on which the electronic apparatus 100 depends, the electronic apparatus 200 transmits, to the electronic apparatus 100 according to the same operation principle, information indicating that the task is completed. In this way, task scheduling in the distributed integration architecture is implemented.

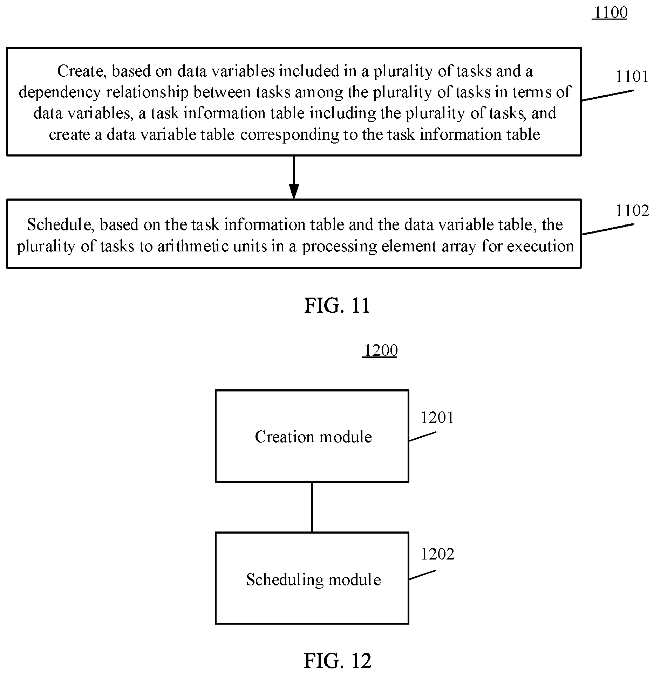

Based on the same inventive concept, an embodiment of this application further provides a task scheduling method. The task scheduling method is used for the electronic apparatus 100 shown in FIG. 2. Further, FIG. 11 shows a process 1100 of the task scheduling method provided in this embodiment of this application. The process 1100 of the task scheduling method may be performed by the scheduler 101, and includes the following steps. Step 1101: Create, based on data variables included in a plurality of tasks and a dependency relationship between tasks among the plurality of tasks in terms of data variables, a task information table including the plurality of tasks, and create a data variable table corresponding to the task information table. Step 1102: Schedule, based on the task information table and the data variable table, the plurality of tasks to arithmetic units in a processing element array for execution. The task information table records task information of each of the plurality of tasks. The task information includes a task identifier of each task, a quantity of previous tasks on which each task depends, and an identifier of a task depending on each task. The dependency relationship includes at least one of the following: Names of used data variables are the same, and address spaces of the used data variables overlap. The data variable table records a data variable identifier, a task identifier of at least one of the plurality of tasks, and an access mode of the at least one task for a data variable. The access mode includes rewriting the data variable or reading the data variable.

In a possible implementation, the plurality of tasks use a plurality of data variables, each of the plurality of data variables corresponds to a data variable table, and the creating a data variable table corresponding to the task information table includes: detecting, based on a first data variable used by a first task among the plurality of tasks, whether a first data variable table of the first data variable has been created; and when it is detected that the first data variable table has not been created, creating the first data variable table, where the first data variable table records a data variable identifier of the first data variable, a task identifier of the first task, and an access mode of the first task for the first data variable.

In a possible implementation, each task corresponds to an independent task information table, the task information of each task is recorded in the corresponding task information table, and the creating a task information table including the plurality of tasks includes: creating a first task information table of the first task, where the first task information table records the task identifier of the first task and a first quantity of previous tasks on which the first task depends, and the first quantity is zero.

In a possible implementation, the creating a task information table including the plurality of tasks includes: adding a task identifier of a second task among the plurality of tasks to the first task information table based on a case that the second task uses the first data variable; and creating a second task information table of the second task, where the second task information table records the task identifier of the second task and a second quantity of previous tasks on which the second task depends. When the second task is used to read the first data variable, if a previous task of the second task has not rewritten the first data variable, the second quantity is 0; or if at least one of previous tasks of the second task has rewritten the first data variable, the second quantity is 1. Alternatively, when the second task is used to rewrite the first data variable, the second quantity is the same as a quantity of tasks that are previously used to access the first data variable and that are recorded in the first data variable table, where the accessing includes reading and rewriting.

In a possible implementation, the creating a data variable table corresponding to the task information table includes: adding, to the first data variable table, the task identifier of the second task and an access mode indicating to read or rewrite the first data variable.

In a possible implementation, the creating a data variable table corresponding to the task information table includes: when the second task is used to rewrite the first data variable, deleting the task identifier of the first task and the access mode of the first task for the first data variable.

In a possible implementation, the task scheduling method 1100 further includes: after the first task is executed, updating, based on a first task identifier that depends on the first task and that is recorded in a task information table corresponding to the first task, a quantity of previous tasks, on which a task depends, in a task information table corresponding to the first task identifier.

In a possible implementation, the task scheduling method 1100 further includes: clearing the task identifier of the first task and the access mode of the first task for the first data variable that are recorded in the data variable table.

In a possible implementation, the scheduling, based on the task information table and the data variable table, the plurality of tasks to arithmetic units in a processing element array for execution includes: sending, to an arithmetic unit in the processing element array for execution, a task among the plurality of tasks that depends on zero previous tasks.

It can be understood that, to implement the foregoing functions, the scheduler 101 includes corresponding hardware and/or software modules for performing the functions. With reference to steps in examples described in embodiments disclosed in this specification, this application can be implemented in a form of hardware or a combination of hardware and computer software. Whether a function is performed by hardware or hardware driven by computer software depends on particular applications and design constraints of technical solutions. Persons skilled in the art may use different methods to implement the described functions for each specific application with reference to embodiments. However, it should not be considered that the implementation goes beyond the scope of this application.

In embodiments, the scheduler 101 may be divided into functional modules based on the foregoing method examples. For example, each functional module may be obtained through division based on each corresponding function, or two or more functions may be integrated into one processing module. The integrated module may be implemented in a form of hardware. It should be noted that division into the modules in embodiments is an example and is merely logical function division. During actual implementation, another division manner may be used.

When each functional module is obtained through division based on each corresponding function, FIG. 12 is a possible diagram of an apparatus 1200 in the foregoing embodiments. The apparatus mentioned above may be further extended. For example, the apparatus 1200 corresponding to FIG. 12 may be a software apparatus running on the scheduler 101, or the apparatus 1200 may be an apparatus obtained by combining software and hardware and embedded in the scheduler 101. As shown in FIG. 12, the apparatus 1200 may include: a creation module 1201, configured to create, based on data variables included in a plurality of tasks and a dependency relationship between tasks among the plurality of tasks in terms of data variables, a task information table including the plurality of tasks, and create a data variable table corresponding to the task information table; and a scheduling module 1202, configured to schedule, based on the task information table and the data variable table, the plurality of tasks to arithmetic units in a processing element array for execution. The task information table records task information of each of the plurality of tasks. The task information includes a task identifier of each task, a quantity of previous tasks on which each task depends, and an identifier of a task depending on each task. The dependency relationship includes at least one of the following: Names of used data variables are the same, and address spaces of the used data variables overlap. The data variable table records a data variable identifier, a task identifier of at least one of the plurality of tasks, and an access mode of the at least one task for a data variable. The access mode includes rewriting the data variable or reading the data variable.

In a possible implementation, the plurality of tasks use a plurality of data variables, each of the plurality of data variables corresponds to a data variable table, and the creation module 1201 is specifically configured to: detect, based on a first data variable used by a first task among the plurality of tasks, whether a first data variable table of the first data variable has been created; and when it is detected that the first data variable table has not been created, create the first data variable table, where the first data variable table records a data variable identifier of the first data variable, a task identifier of the first task, and an access mode of the first task for the first data variable.

In a possible implementation, each task corresponds to an independent task information table, the task information of each task is recorded in the corresponding task information table, and the creation module 1201 is specifically configured to create a first task information table of the first task, where the first task information table records the task identifier of the first task and a first quantity of previous tasks on which the first task depends, and the first quantity is zero.

In a possible implementation, the creation module 1201 is specifically configured to: add a task identifier of a second task among the plurality of tasks to the first task information table based on a case that the second task uses the first data variable; and create a second task information table of the second task, where the second task information table records the task identifier of the second task and a second quantity of previous tasks on which the second task depends. When the second task is used to read the first data variable, if a previous task of the second task has not rewritten the first data variable, the second quantity is 0; or if at least one of previous tasks of the second task has rewritten the first data variable, the second quantity is 1. Alternatively, when the second task is used to rewrite the first data variable, the second quantity is the same as a quantity of tasks that are previously used to access the first data variable and that are recorded in the first data variable table, where the accessing includes reading and rewriting.

In a possible implementation, the creation module 1201 is specifically configured to add, to the first data variable table, the task identifier of the second task and an access mode indicating to read or rewrite the first data variable.

In a possible implementation, the creation module 1201 is specifically configured to: when the second task is used to rewrite the first data variable, delete the task identifier of the first task and the access mode of the first task for the first data variable.

In a possible implementation, the apparatus 1200 further includes an update module (not shown in the figure), configured to: after the first task is executed, update, based on a first task identifier that depends on the first task and that is recorded in a task information table corresponding to the first task, a quantity of previous tasks, on which a task depends, in a task information table corresponding to the first task identifier.

In a possible implementation, the apparatus 1200 further includes a clearing module (not shown in the figure), configured to clear the task identifier of the first task and the access mode of the first task for the first data variable that are recorded in the data variable table.

In a possible implementation, the scheduling module 1202 is specifically configured to send, to an arithmetic unit in the processing element array for execution, a task among the plurality of tasks that depends on zero previous tasks.

The apparatus 1200 provided in this embodiment is configured to perform the task scheduling method perform by the scheduler 101, and can achieve the same effect as the foregoing implementation method or apparatus. Specifically, the modules corresponding to FIG. 12 may be implemented by using software, hardware, or a combination thereof. For example, each module may be implemented in a form of software, and is configured to drive the scheduler 101 to operate. Alternatively, each module may include two parts: a corresponding processor and corresponding driver software. In other words, each module is implemented by using a combination of software and hardware.

For example, the scheduler 101 may further include at least one processor and a memory. The at least one processor may invoke all or some of computer programs stored in the memory to control and manage actions of the controller 102. For example, the at least one processor may be configured to support the scheduler 101 in performing the steps performed by the foregoing modules. The memory may be configured to support the scheduler 101 in storing program code, data, and the like. The memory includes but is not limited to at least a part of storage space, a cache (Cache), or a register of the memory 103. The at least one processor may implement or execute a plurality of example logical modules described with reference to content disclosed in this application, and may be one or a combination of a plurality of microprocessors that implement a computing function. In addition, the at least one processor may further include another programmable logic device, a transistor logic device, a discrete hardware component, or the like.

An embodiment further provides a computer-readable storage medium. The computer-readable storage medium stores computer instructions. When the computer instructions are run on a computer, the computer is enabled to perform the foregoing related method steps to implement the method for securely accessing software in the foregoing embodiments.

An embodiment further provides a computer program product. When the computer program product is run on a computer, the computer is enabled to perform the foregoing related steps to implement the method for securely accessing software in the foregoing embodiments.

The computer-readable storage medium or the computer program product provided in the embodiments is configured to perform the corresponding methods provided above. Therefore, for benefits that can be achieved, refer to the benefits in the corresponding methods provided above. Details are not described herein again.

Based on the descriptions of the foregoing implementations, persons skilled in the art may understand that, for a purpose of convenient and brief description, division into the foregoing functional modules is merely used as an example for illustration. During practical application, the foregoing functions may be allocated to different functional modules and implemented according to a requirement. In other words, an inner structure of an apparatus is divided into different functional modules to implement all or some of the functions described above.

In addition, functional units in embodiments of this application may be integrated into one product, or each unit may exist alone physically, or two or more units may be integrated into one product. Corresponding to FIG. 9, when the modules are implemented in a form of a software functional unit and sold or used as an independent product, the modules may be stored in a readable storage medium. Based on such an understanding, technical solutions in embodiments of this application essentially, or a part contributing to the conventional technology, or all or some of the technical solutions may be implemented in a form of a software product. The software product is stored in a storage medium and includes several instructions for enabling a device (which may be a single-chip microcomputer, a chip, or the like) or a processor (processor) to perform all or some of the steps of the methods in embodiments of this application. The readable storage medium includes any medium that can store program code, for example, a USB flash drive, a removable hard disk, a read-only memory (read-only memory, ROM), a random access memory (random access memory, RAM), a magnetic disk, or a compact disc.

Finally, it should be noted that the foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions in embodiments of this application.

## Claims

1. A task scheduling method, wherein the method comprises:
creating, based on data variables comprised in a plurality of tasks and a dependency relationship between tasks among the plurality of tasks in terms of data variables, a task information table comprising the plurality of tasks, and creating a data variable table corresponding to the task information table; and
scheduling, based on the task information table and the data variable table, the plurality of tasks to arithmetic units in a processing element array for execution, wherein
the task information table records task information of each of the plurality of tasks, the task information comprises a task identifier of each task, a quantity of previous tasks on which each task depends, and an identifier of a task depending on each task, and the dependency relationship comprises at least one of the following: names of used data variables are the same, and address spaces of the used data variables overlap; and
the data variable table records a data variable identifier, a task identifier of at least one of the plurality of tasks, and an access mode of the at least one task for a data variable, and the access mode comprises rewriting the data variable or reading the data variable.

2. The method according to claim 1, wherein the plurality of tasks use a plurality of data variables, each of the plurality of data variables corresponds to a data variable table, and the creating a data variable table corresponding to the task information table comprises:
detecting, based on a first data variable used by a first task among the plurality of tasks, whether a first data variable table of the first data variable has been created; and
when it is detected that the first data variable table has not been created, creating the first data variable table, wherein the first data variable table records a data variable identifier of the first data variable, a task identifier of the first task, and an access mode of the first task for the first data variable.

3. The method according to claim 2, wherein each task corresponds to an independent task information table, the task information of each task is recorded in the corresponding task information table, and the creating a task information table comprising the plurality of tasks comprises:
creating a first task information table of the first task, wherein the first task information table records the task identifier of the first task and a first quantity of previous tasks on which the first task depends, wherein
the first quantity is zero.

4. The method according to claim 3, wherein the creating a task information table comprising the plurality of tasks comprises:
adding a task identifier of a second task among the plurality of tasks to the first task information table based on a case that the second task uses the first data variable; and
creating a second task information table of the second task, wherein the second task information table records the task identifier of the second task and a second quantity of previous tasks on which the second task depends, wherein
when the second task is used to read the first data variable, if a previous task of the second task has not rewritten the first data variable, the second quantity is 0; or if at least one of previous tasks of the second task has rewritten the first data variable, the second quantity is 1; or
when the second task is used to rewrite the first data variable, if a previous task of the second task has not rewritten the first data variable, the second quantity is a quantity of tasks that have read the first data variable among previous tasks of the second task; or if a previous task of the second task has rewritten the first data variable, the second quantity is a quantity of tasks that have read the first data variable among previous tasks of the second task plus 1.

5. The method according to claim 4, wherein the creating a data variable table corresponding to the task information table comprises:
adding, to the first data variable table, the task identifier of the second task and an access mode indicating to read or rewrite the first data variable.

6. The method according to claim 5, wherein the creating a data variable table corresponding to the task information table comprises:
when the second task is used to rewrite the first data variable, deleting the task identifier of the first task and the access mode of the first task for the first data variable.

7. The method according to any one of claims 2 to 6, wherein the method further comprises:
after the first task is executed, updating, based on a first task identifier that depends on the first task and that is recorded in the first task information table, a quantity of previous tasks, on which a task depends, in a task information table corresponding to the first task identifier.

8. The method according to claim 7, wherein the method further comprises:
clearing the task identifier of the first task and the access mode of the first task for the first data variable that are recorded in the first data variable table.

9. The method according to any one of claims 1 to 8, wherein the scheduling, based on the task information table and the data variable table, the plurality of tasks to arithmetic units in a processing element array for execution comprises:
sending, to an arithmetic unit in the processing element array for execution, a task among the plurality of tasks that depends on zero previous tasks.

10. An electronic apparatus, wherein the electronic apparatus comprises a task scheduler and a processing element array, wherein
the task scheduler is configured to: create, based on data variables comprised in a plurality of tasks and a dependency relationship between tasks among the plurality of tasks in terms of data variables, a task information table comprising the plurality of tasks, and create a data variable table corresponding to the task information table; and deliver the plurality of tasks to the processing element array based on the task information table and the data variable table; and
the processing element array comprises a plurality of arithmetic units, and the plurality of arithmetic units are configured to process the plurality of tasks, wherein
the task information table records task information of each of the plurality of tasks, the task information comprises an identifier of each task, a quantity of previous tasks on which each task depends, and an identifier of a task depending on each task, and the dependency relationship comprises at least one of the following: names of used data variables are the same, and used data memory spaces overlap; and
the data variable table records a data variable identifier, a task identifier of at least one of the plurality of tasks, and an access mode of the at least one task for a data variable, and the access mode comprises rewriting the data variable or reading the data variable.

11. The electronic apparatus according to claim 10, wherein the electronic apparatus further comprises:
a memory, configured to store the task information table and the data variable table.

12. The electronic apparatus according to claim 10 or 11, wherein the electronic apparatus further comprises a controller, and the controller is configured to:
generate the plurality of tasks;
store the plurality of tasks to the memory, wherein each of the plurality of tasks comprises at least one of the following: a task identifier, a program instruction, a used data variable, and an address space of the used data variable; and
send indication information to the task scheduler, wherein the indication information indicates that the plurality of tasks have been stored to the memory.

13. The electronic apparatus according to claim 11 or 12, wherein the plurality of tasks use a plurality of data variables, each of the plurality of data variables corresponds to a data variable table, and when creating the data variable table corresponding to the task information table, the scheduler is specifically configured to:
read a first task among the plurality of tasks from the memory, and detect, based on a first data variable used by the first task, whether a first data variable table of the first data variable has been created; and
when it is detected that the first data variable table has not been created, create the first data variable table, wherein the first data variable table records an identifier of the first data variable, a task identifier of the first task, and an access mode of the first task for the first data variable.

14. The electronic apparatus according to claim 13, wherein each task corresponds to an independent task information table, the task information of each task is recorded in the corresponding task information table, and when creating the task information table comprising the plurality of tasks, the scheduler is specifically configured to:
create a first task information table of the first task, wherein the first task information table records the task identifier of the first task and a first quantity of previous tasks on which the first task depends, wherein
the first quantity is zero.

15. The electronic apparatus according to claim 14, wherein when creating the task information table comprising the plurality of tasks, the scheduler is specifically configured to:
read a second task among the plurality of tasks from the memory;
add a task identifier of the second task to the first task information table based on a case that the second task uses the first data variable; and
create a second task information table of the second task, wherein the second task information table records the task identifier of the second task and a second quantity of previous tasks on which the second task depends, wherein
when the second task is used to read the first data variable, if a previous task of the second task has not rewritten the first data variable, the second quantity is 0; or if at least one of previous tasks of the second task has rewritten the first data variable, the second quantity is 1; or
when the second task is used to rewrite the first data variable, if a previous task of the second task has not rewritten the first data variable, the second quantity is a quantity of tasks that have read the first data variable among previous tasks of the second task; or if a previous task of the second task has rewritten the first data variable, the second quantity is a quantity of tasks that have read the first data variable among previous tasks of the second task plus 1.

16. The electronic apparatus according to claim 15, wherein when creating the data variable table corresponding to the task information table, the scheduler is specifically configured to:
add, to the first data variable table, the task identifier of the second task and an access mode indicating to read or rewrite the first data variable.

17. The electronic apparatus according to claim 16, wherein when creating the data variable table corresponding to the task information table, the scheduler is specifically configured to:
when the second task is used to rewrite the first data variable, delete the task identifier of the first task and the access mode of the first task for the first data variable.

18. The electronic apparatus according to any one of claims 13 to 17, wherein the scheduler is further configured to:
after the first task is executed, update, based on a first task identifier that depends on the first task and that is recorded in the first task information table, a quantity of previous tasks, on which a task depends, in a task information table corresponding to the first task identifier.

19. The electronic apparatus according to claim 18, wherein the scheduler is further configured to:
clear the task identifier of the first task and the access mode of the first task for the first data variable that are recorded in the data variable table.

20. The electronic apparatus according to any one of claims 10 to 19, wherein during the delivering the plurality of tasks to the processing element array, the scheduler is specifically configured to:
send, to an arithmetic unit in the processing element array for execution, a task among the plurality of tasks that depends on zero previous tasks.

21. An apparatus, wherein the apparatus comprises a memory and a task scheduler, the memory is configured to store a computer program, and the task scheduler is configured to invoke all or some of computer programs stored in the memory, to perform the task scheduling method according to any one of claims 1 to 9.

22. A computer-readable storage medium, wherein the computer-readable storage medium stores a computer program, and when being executed by a task scheduler, the computer program is used to implement the task scheduling method according to any one of claims 1 to 9.
